# FASCICULE DE BREVET EUROPEEN

(11) **EP 2 727 091 B1**
(45) Date de publication et mention de la délivrance du brevet: **13.09.2017**
(21) Numéro de dépôt: 12744032.9
(22) Date de dépôt: 02.07.2012
(51) Int. Cl.: G07F 17/24, G07F 15/00, B60L 11/18

(54) **PROCEDE ET SYSTEME DE GESTION D'UN EMPLACEMENT DE VEHICULE A RECHARGEMENT EN ENERGIE, NOTAMMENT UN VEHICULE ELECTRIQUE EN LIBRE SERVICE**
VERFAHREN UND SYSTEM ZUR VERWALTUNG EINES AUFLADERAUMS FÜR EIN FAHRZEUG, INSBESONDERE EIN SELBSTBEDIENUNGSELEKTROFAHRZEUG
METHOD AND SYSTEM FOR MANAGING A POWER-CHARGING SPACE FOR A VEHICLE, ESPECIALLY A SELF-SERVICE ELECTRICAL VEHICLE

(30) Priorité: 30.06.2011 FR 1102067
(43) Date de publication de la demande: 07.05.2014
(73) Titulaire: Bluecarsharing, 92420 Vaucresson (FR)
(72) Inventeur: HALNAIS, Pierre, F-77580 Bouleurs (FR); LAMBRINOS, Clément, F-93100 Montreuil (FR); AUGUSTIN, Aymeric, F-92410 Ville d'Avray (FR); BARROIS, Raphaël, F-75017 Paris (FR); DE LA VILLE, Romain, F-78560 Port Marly (FR)
(74) Mandataire: Pontet Allano & Associes
(86) Numéro de dépôt international: PCT/FR2012/051523
(87) Numéro de publication internationale: WO 2013/001251

(56) Documents cités:
- EP-A1- 2 273 462
- FR-A1- 2 872 321
- US-A- 6 081 205
- US-A1- 2010 161 480

## Description

L'invention concerne un procédé et un système de gestion d'un emplacement de stationnement pour véhicule, pour un emplacement comprenant des moyens de détection d'occupation dudit emplacement et au moins une borne de rechargement d'énergie adaptée à un rechargement automatique, notamment un rechargement électrique automatique après connexion manuelle. Ce procédé comprend, au sein d'une phase dite de surveillance d'occupation (par opposition avec d'autres phases comme une phase de stockage d'un véhicule non attribué) :
- d'une part une détection d'un état de présence ou non d'un véhicule d'un objet occupant l'emplacement géré, et
- d'autre part une détection d'un état de branchement ou non (opération ou état) d'un véhicule à la borne de rechargement.

Selon l'invention, ce procédé comprend en outre, dans le cas d'une détection de présence sans détection de branchement, au moins une opération de traitement dit de stationnement, par exemple une émission d'au moins une alerte par des moyens sonores ou visuels, ou par enregistrement ou émission d'au moins un message informatique.

### Etat de la technique

Dans le domaine de la gestion d'emplacements de stationnement, typiquement pour des véhicules automobiles de type véhicule léger, la surveillance de l'occupation de l'emplacement est un point important pour permettre la bonne gestion des emplacements ainsi que leur rentabilité.

Ainsi, on connait dans l'état de la technique des systèmes de détection de véhicule sur des places de parking. Par exemple, le document FR 2 872 321 divulgue une place de parking associée à une borne d'identification munie de moyens d'identification de l'utilisateur. Si l'utilisateur ne présente pas sa carte d'identification sur la borne ou que celle-ci ne lui donne pas droit à un accès à la place en question, les forces de l'ordre sont prévenues par le système.

Le problème est plus compliqué lorsque l'emplacement de stationnement comporte aussi une borne de rechargement en énergie, et plus encore lorsqu'il fait partie d'une « station » regroupant des emplacements dédiés au véhicule d'un parc automobile spécifique, par exemple du fait que les véhicules ne doivent pas tous être gérés de la même façon selon le contrat ou le paiement de chaque utilisateur. On connait, par exemple, les documents EP 2 273 462 A1 et US 6 081 205 A qui décrivent, chacun, un système pour délivrer de l'électricité à un véhicule au niveau d'un emplacement de stationnement muni d'une borne de charge.

Cette gestion dans le cadre d'un parc de véhicules fonctionnant en libre service présente en outre des problèmes supplémentaires, par exemple parce que ces véhicules sont censés être à la fois personnalisés temporairement tout en restant interchangeables d'une place à l'autre et d'un utilisateur à l'autre.

Un but de l'invention est de remédier aux inconvénients de l'art antérieur, et en particulier :
- de simplifier et fiabiliser la gestion de l'occupation des emplacements, et la gestion de la remise des véhicules à l'issue d'une période d'attribution ;
- de rendre cette gestion plus précise et plus souple ;
- de permettre une intervention rapide sur l'emplacement, et qui soit pertinente en fonction de la nature de la situation, qu'il s'agisse par exemple d'une occupation abusive, d'un oubli ou d'un mauvais fonctionnement ; et
- de permettre la gestion de différentes possibilités de services, par exemple à l'usage de différents types d'usagers et de véhicule en fonction des objectifs opérationnels.

### Exposé de l'invention

L'invention propose un procédé de gestion d'un emplacement de stationnement pour véhicule, selon la revendication 1.

Dans cet esprit, l'invention propose aussi un système de gestion d'un emplacement de stationnement de véhicule selon la revendication 10, qui comprend :
- des moyens de détection d'occupation dudit emplacement ;
- des moyens de fourniture d'énergie formant une borne de rechargement apte à fournir de l'électricité à un véhicule connecté à la borne;
- des moyens de détection de branchement d'un véhicule à ladite borne de rechargement ;
- des moyens sonores, visuels ou numériques d'émission d'au moins un message d'information ou d'alerte ; et
- des moyens de traitement de données configurés pour mettre en oeuvre le procédé de gestion selon l'invention.

Selon une particularité, le procédé selon l'invention peut comprendre en outre un décompte d'une temporisation à partir d'une détection positive de présence à un instant déterminé. Le déclenchement de l'opération de traitement de stationnement est alors conditionné à une détection de présence (par exemple continue ou réitérée) avec absence de branchement (constat ou déduction de l'état non branché) à l'issue de ladite temporisation. Une telle alerte après temporisation de régularisation, peut par exemple être cumulée avec une information immédiate. Cela permet de ne pas déclencher l'opération de traitement lorsque la présence détectée est un objet ne faisant que passer devant les bornes de charge.

L'opération de traitement de stationnement peut aussi comprendre une étape de vérification d'au moins une donnée numérique représentant ou non une autorisation de stationnement et permettant de déterminer si le véhicule est autorisé à stationner, au moins temporairement sur l'emplacement, même sans être branché. Cette autorisation peut par exemple être activée sur et/ou mémorisée dans la borne de rechargement, ou par communication avec une borne informatique d'interface telle qu'une borne de location, ou par communication avec un système informatique gérant une pluralité de véhicules compatibles de manière interchangeable avec une pluralité d'emplacements.

Le procédé peut en outre comprendre un décompte d'une durée écoulée depuis le début de la détection de présence ou depuis le début de la phase de traitement de stationnement, notamment si on détermine que le véhicule a obtenu une autorisation de stationnement. Une fois le temps écoulé, la donnée relative à l'autorisation de stationnement peut être modifiée, ce qui signifie que le véhicule ne sera plus autorisé à stationner et/ou que l'étape de signalisation peut se produire.

Selon une particularité de l'invention, le procédé peut également comprendre une étape de vérification d'appartenance ou non du véhicule détecté à un ensemble de véhicules compatibles avec la borne de rechargement. Une telle étape peut être effectuée au moins grâce à une comparaison des coordonnées GPS de chacun des véhicules de l'ensemble avec ceux de l'emplacement. Une étape de signalisation (par exemple, envoi d'un message aux forces de l'ordre) peut également être mise en oeuvre s'il est déterminé que le véhicule n'appartient pas à l'ensemble.

Une étape de signalisation d'un autre type (par exemple envoi d'un message à un utilisateur associé au véhicule détecté) peut également être mise en oeuvre lorsque le véhicule est détecté comme appartenant à l'ensemble des véhicules gérés.

En effet, selon une particularité, dans le cas d'une appartenance positive du véhicule à l'ensemble de véhicules compatibles avec la borne de rechargement, le traitement peut comprendre en outre les étapes suivantes, par exemple dans le traitement de stationnement :
- recherche d'un identifiant représentant un utilisateur actuellement titulaire du véhicule détecté, par un système informatique gérant une pluralité de véhicules compatibles de manière interchangeable avec une pluralité d'emplacements ; et
- émission d'un message numérique à destination dudit utilisateur actuellement titulaire du véhicule

On notera que les opérations de vérification de l'autorisation et de l'appartenance sont optionnelles et peuvent chacune constituer la seule vérification effectuée, ou peuvent être effectuées l'une après l'autre.

De façon avantageuse, lorsque le branchement d'un véhicule sur la borne est détecté, le procédé détermine si le véhicule appartient à un ensemble de véhicules compatibles avec la borne de charge, par exemple par des moyens de communication numérique de ladite borne de rechargement avec le véhicule branché. Cela peut être notamment effectué par l'échange d'informations par l'intermédiaire d'un fil pilote appartenant à la connexion entre le véhicule et la borne.

On peut également considérer que la phase de surveillance d'occupation est effectuée uniquement lors de la première détection d'un véhicule par le détecteur de présence.

L'invention peut permettre ainsi, par exemple, de fournir à un utilisateur de bonne foi une information de mauvaise connexion ou d'oubli de connexion, ou de stationnement dépassé ou non déclaré.

L'invention permet ainsi de détecter les fraudes, mais peut aussi permettre détecter les problèmes dus à une remise non adaptée par l'utilisateur d'un véhicule, pour des raisons techniques ou des raisons humaines.

Elle permet de simplifier et fiabiliser la gestion de l'occupation des emplacements de façon plus précise et plus souple, ainsi que la gestion de la remise des véhicules à l'issue d'une période d'attribution, ainsi que sa réintroduction dans le système global de stockage et de mise à disposition. Elle permet aussi une intervention rapide sur l'emplacement, et qui soit pertinente en fonction de la nature de la situation, qu'il s'agisse par exemple d'une occupation abusive, d'un oubli ou d'un mauvais fonctionnement.

Elle permet en outre de proposer et gérer différentes possibilités de services, par exemple à l'usage de différents types d'usagers et de véhicule en fonction des objectifs opérationnels, comme par exemple un stationnement temporaire à l'usage des utilisateurs de véhicules du parc géré, ou une recharge en énergie à destination d'utilisateurs de véhicules techniquement compatibles mais n'appartenant pas au parc géré.

Des modes de réalisation variés de l'invention sont prévus, intégrant selon l'ensemble de leurs combinaisons possibles les différentes caractéristiques optionnelles exposées ici.

D'autres particularités et avantages de l'invention ressortiront de la description détaillée d'un mode de mise en oeuvre nullement limitatif, et des dessins annexés sur lesquels :
- la FIGURE 1 est une représentation schématique d'un exemple de système de gestion globale d'un parc de véhicules électriques proposé à la location ;
- la FIGURE 2 est une représentation schématique d'une borne de chargement dans un système de gestion d'emplacement selon l'invention ;
- la FIGURE 3 est un organigramme schématique illustrant un exemple de mode de réalisation du procédé selon l'invention lors d'une arrivée de véhicule sur un emplacement ;
- la FIGURE 4 est un organigramme schématique illustrant un exemple de mode de réalisation du procédé selon l'invention lors d'une arrivée de véhicule sur un emplacement, dans une variante avec avertissement à l'utilisateur en cas de véhicule géré non connecté ;
- la FIGURE 5 est un organigramme schématique illustrant un exemple de mode de réalisation du procédé selon l'invention lors d'un départ de véhicule d'un emplacement ;
- la FIGURE 6 est un schéma temporel illustrant un exemple de fonctionnement d'un emplacement géré selon l'invention.

### Description détaillée

L'invention est ici décrite dans le cadre de sa mise en oeuvre au sein d'un système d'autopartage, qui propose une location courte durée de véhicules automobiles de type véhicule particulier. Ce système est prévu pour proposer cette location en libre-service, de façon interchangeable entre différentes stations réparties au sein d'une zone de fonctionnement prédéterminée, et dans lequel tous les véhicules peuvent indifféremment être pris en location dans une station et déposés dans une autre.

L'invention peut cependant être mise en oeuvre dans des systèmes ou des services plus ou moins similaires ou différents de celui décrit ici.

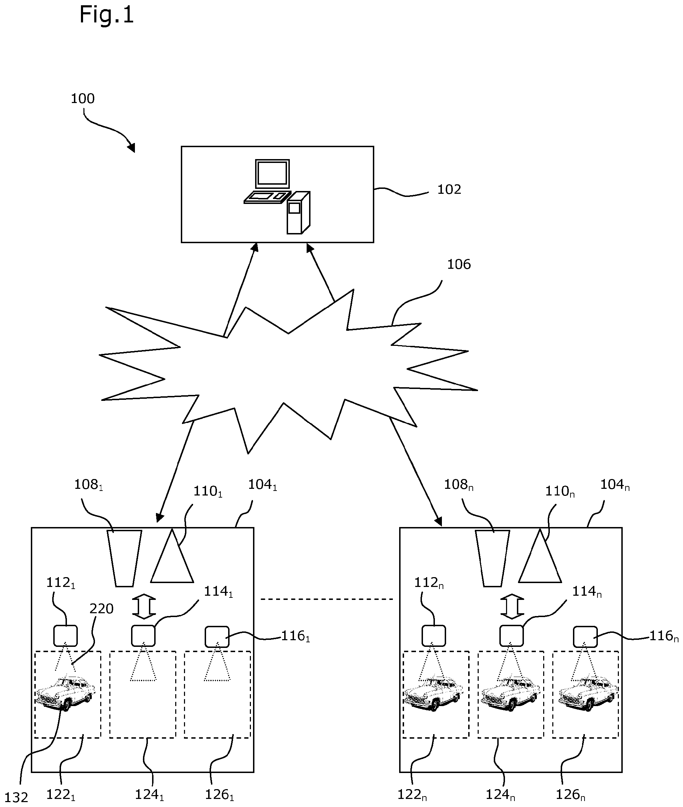

La FIGURE 1 est une représentation schématique d'un système de gestion globale d'un tel parc de véhicules électriques proposé à la location et des stations correspondantes.

Le système 100 représenté sur la figure 1 comprend un site central 102 (également appelé organe central dans la suite de la description) connecté à plusieurs sites - ou stations - 104₁-104ₙ, dits de location au travers d'un réseau de communication 106 sans fil, par exemple GPRS, ou d'un réseau filaire, par exemple de type DSL. De préférence, chaque station est reliée au site central par l'intermédiaire des deux réseaux distincts, ce qui permet une connexion en continu même si l'un des réseaux est défaillant.

Chaque station de location comprend une borne d'abonnement 108 pour l'enregistrement d'un nouvel abonné, une borne de location 110 pour la location d'un véhicule et plusieurs bornes de charge 112-116, chaque borne de charge étant prévue pour charger un véhicule muni d'une batterie électrique à un emplacement de stationnement.

Le site central 102 peut être connecté directement à chacune des bornes d'une station de location 104 au travers du réseau 106 ou seulement à la borne d'abonnement et/ou à la borne de location et/ou aux bornes de charge 112-116.

Au moins deux bornes d'une station de location sont connectées entre elles au travers d'une connexion filaire (non représentée).

Le site central 102 est également agencé pour se connecter à un véhicule électrique comprenant un boitier de connexion avec un ou plusieurs éléments du véhicule et/ou une interface de communication avec l'utilisateur, par l'intermédiaire d'un réseau GPRS. Chaque véhicule est de ce fait équipé d'une puce GSM.

Le site central 102 est également agencé pour échanger des informations avec un appareil de communication portable tel qu'un PDA, un téléphone portable, etc., porté par un opérateur du service de location et également relié au site central par l'intermédiaire d'un réseau GPRS.

Le système permet de gérer une pluralité de véhicules comprenant chacun une unité de commande apte à communiquer avec l'organe central et avec différents organes du véhicule, et une interface utilisateur.

Les utilisateurs sont aptes à interagir avec les différentes bornes ainsi qu'avec les différents éléments des véhicules. En outre, le service de location de véhicule avec le système selon l'invention peut être également effectué à l'aide des opérateurs et de leur terminal mobile tel qu'un PDA, qui peuvent intervenir dans le service.

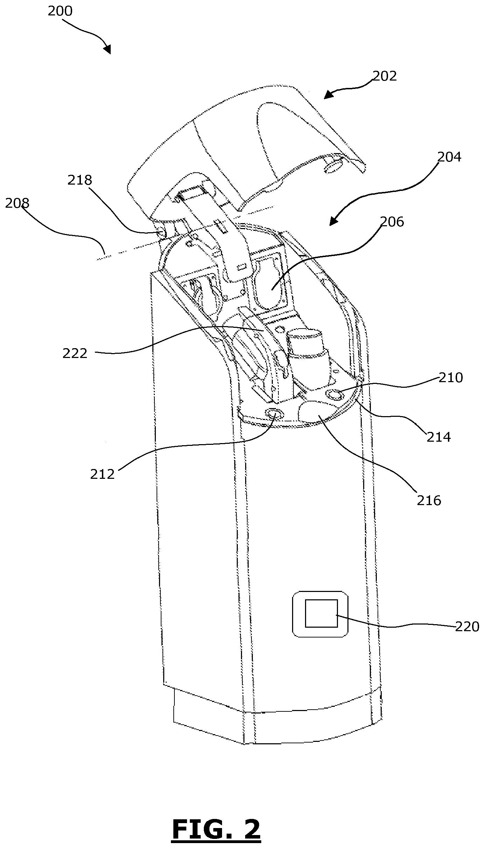

La FIGURE 2 est une représentation schématique d'une borne de rechargement (ou borne de charge) selon l'invention.

La borne de chargement 200 comprend un capot ou un couvercle 202 mobile couvrant une zone/un compartiment 204 d'interface abonnés principalement située sous le couvercle mobile 202.

Cette zone 204 comporte une embase femelle 206 de connecteur de charge qui permet d'alimenter les véhicules particuliers, par exemple un connecteur de type 3 selon la norme IEC 61851-1 ou IEC 62196-2.

La zone 204 comprend en outre un enrouleur portant un câble électrique multiconducteurs muni à une extrémité d'un connecteur mâle 224 à insérer dans l'embase 206. L'autre extrémité du câble porte une prise mobile 222 pour la connexion de chargement sur un véhicule électrique compatible, ainsi qu'un ou plusieurs fils pilotes de communication entre la borne et le système électronique du véhicule.

Cette zone 204 comporte également un rangement pour la prise mobile 222 et un rangement pour le connecteur 224 côté borne de chargement à connecter sur l'embase 206 type 3.

La borne de charge comporte un câble embarqué à raccorder au véhicule muni d'un connecteur femelle et/ou une prise (notamment de type 3) pour raccorder un véhicule muni d'un connecteur mâle. Selon un mode de réalisation particulier de l'invention, le câble embarqué doit être branché à une extrémité dans la prise de type 3 pour être relié au secteur. Il est branché sur le véhicule à son autre extrémité (voir ci-dessous)

Un détecteur 220 de présence du véhicule est commandé par la borne 200 associée à un emplacement prédéterminé. Il peut être intégré à la borne, par exemple sous la forme d'un capteur infra rouge ou d'une caméra - de préférence situé en partie basse de la borne comme illustré en FIGURE 2, ou être intégré à la place de stationnement par exemple sous la forme d'une boucle de courant dans le sol. La borne 200 comprend un détecteur de branchement, par exemple sous la forme d'un fil pilote pour connexion sur la borne d'une prise d'un câble embarqué par le véhicule, ou pour la connexion sur le véhicule d'une prise connectée à la borne. Ce détecteur peut aussi comprendre des moyens de détection de la connexion d'un moyen mécanique de verrouillage entre embase 206 et câble et/ou entre véhicule et câble.

Chaque véhicule 132 géré par le système 100 comprend un boîtier électronique qui contient et met à jour des informations concernant le véhicule, telles que son identifiant et ses coordonnées GPS. Le véhicule est apte à communiquer avec le système central 102 grâce à une liaison sans fil, typiquement une communication de téléphonique numérique de type GPRS. Il peut aussi comprendre des moyens pour communiquer avec la borne de charge, par exemple par une liaison radio locale ou grâce à la connexion électrique entre ces deux éléments. La borne de charge 122 comprend des moyens pour communiquer avec la borne de location 110 de la station, laquelle communique avec le système central 102.

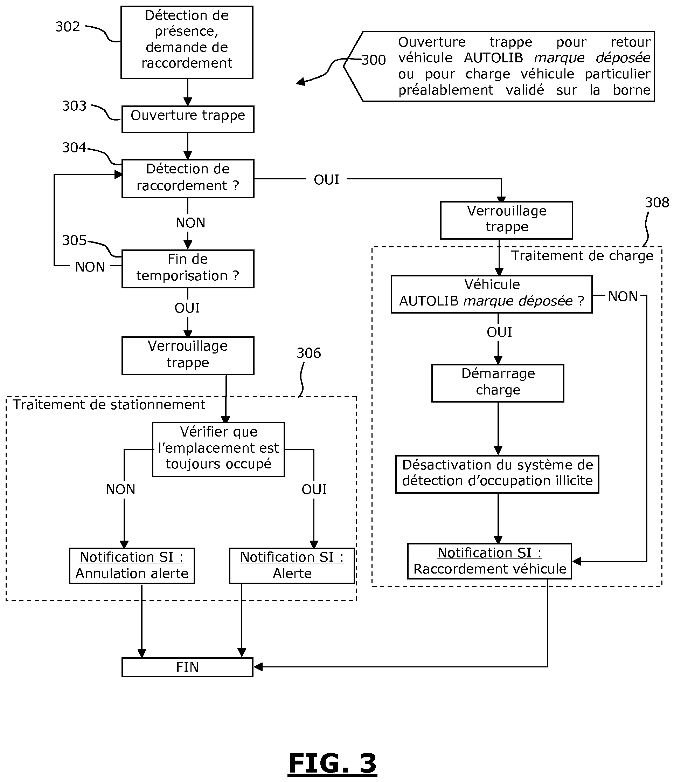

La FIGURE 3 illustre schématiquement le déroulement d'une phase de surveillance d'occupation indésirable, dans un exemple de mode de réalisation de l'invention.

Dans cet exemple, aucun véhicule n'est initialement présent sur la place, et le détecteur d'occupation indésirable est activé. Lorsqu'on détecte 302 la présence d'un élément sur l'emplacement (durant notamment une durée supérieure à une durée de seuil pour plus de fiabilité), on laisse passer une temporisation prédéterminée décomptée par une horloge interne de la borne de charge et on demande ensuite une détection du branchement 304.

Si aucun branchement n'est détecté 304, la borne de charge déclenche un processus 306 de traitement de gestion du stationnement sans connexion.

A l'issue de ce traitement de stationnement 306, si la borne constate que le stationnement est indésirable, elle vérifie que le détecteur de présence détecte toujours un véhicule sur l'emplacement de stationnement. Si c'est le cas, elle avertit de ce cas exceptionnel l'organe central 102 (ou système d'information = SI). L'avertissement peut également être effectué par signalisation lumineuse ou sonore, par exemple sur la borne de charge, voire sur la borne de location. L'avertissement peut également être effectué par envoi d'un message mail ou SMS sur un terminal fixe ou mobile d'un opérateur du service, ou aux forces de l'ordre.

Pour transmettre cet avertissement, la borne de charge transmet à l'organe central, par l'intermédiaire de la borne de location, un message lui indiquant l'anomalie qu'elle constate, et le message comprenant en outre l'identifiant de la borne de location et/ou de charge. L'organe central construit un message d'avertissement, par exemple en direction des forces de l'ordre ou d'un opérateur, par exemple par l'intermédiaire d'une puce GSM lui permettant de ce faire. De préférence un tel message comprend la localisation de la borne de charge, obtenue grâce à des informations puisées dans une base de données interne du système.

Comme on le voit sur la FIGURE 3, si un raccordement est détecté 304, on commande le verrouillage de la trappe 202. Ce verrouillage peut optionnellement être déclenché automatiquement lorsqu'une durée prédéterminée 305 s'est écoulée depuis l'ouverture de la trappe. Puis, si le véhicule est un véhicule appartenant à un parc de véhicules mis à disposition des utilisateurs du service de location, on commence la charge du véhicule et on désactive le capteur de présence. On notifie également l'organe central 102. S'il ne s'agit pas d'un véhicule appartenant au parc de véhicules gérés, on ne désactive pas en revanche ce capteur, par exemple pour permettre un décompte du temps de stationnement et possiblement une facturation ou une limitation du temps de charge.

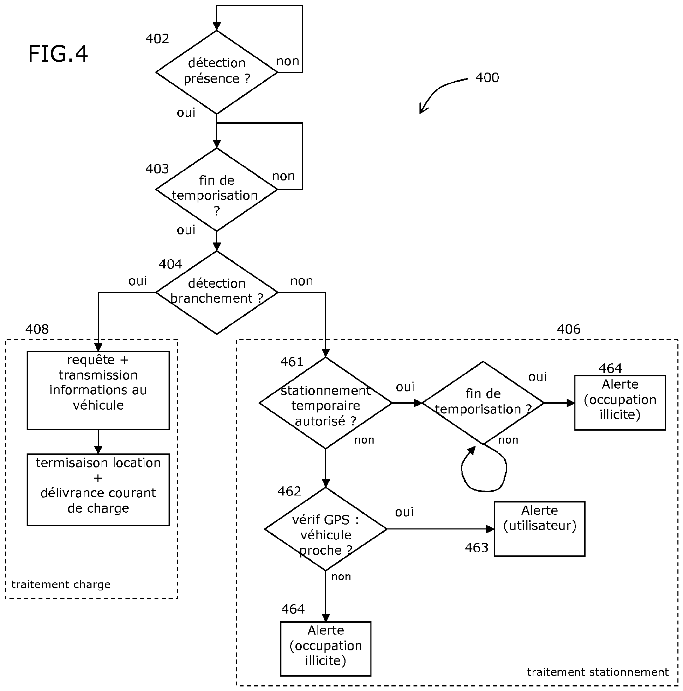

La FIGURE 4 illustre schématiquement le déroulement d'une phase de surveillance d'occupation indésirable, dans un exemple de mode de réalisation où le traitement de stationnement comprend des traitements de vérification supplémentaires. Dans cet exemple, une ou plusieurs vérifications peuvent être effectuées pour gérer les cas particuliers, par exemple pour éviter de déranger l'agent de location ou les forces de l'ordre lorsque cela n'est pas nécessaire.

Dans une première variante, une fois la présence d'un véhicule détectée 402 alors que son branchement n'est pas détecté 404, on peut vérifier 461 si un stationnement temporaire (durant une durée maximale prédéterminée, par exemple 15 minutes) a été demandé.

Le conducteur d'un véhicule appartenant au parc de véhicules gérés peut en effet avoir la possibilité de demander un stationnement temporaire. Pour cela, il doit de préférence s'identifier et demander le stationnement temporaire en appuyant sur une commande de l'interface d'une borne de charge ou de location, et une vérification peut être faite au niveau de l'organe central pour vérifier qu'un véhicule est en cours de location pour cet utilisateur, ce qui permettra d'autoriser la demande de stationnement temporaire.

Indépendamment des conditions requises pour demander le stationnement temporaire, le procédé comprend une étape de vérification de l'état de la place de stationnement, auprès notamment de la borne de location ou du module de supervision des bornes de l'organe central qui stocke des informations sur l'état de ces places. Si celle-ci est indiquée en stationnement temporaire, l'étape d'avertissement n'a pas lieu. Le statut de stationnement temporaire est désactivé automatiquement une fois la durée prédéterminée dépassée.

Dans une deuxième variante, qui peut être combinée ou non avec la première, le système vérifie 462 qu'il existe une voiture en cours de location garée sur la place de stationnement prédéterminée. Cela peut être effectué à l'aide d'un module GPS situé dans la voiture et permettant la localisation de celle-ci et d'une communication en temps réel de la voiture avec l'organe central, l'unité de commande transmettant les coordonnées du véhicule à l'organe central. Si une voiture appartenant au parc de véhicules est garée sur la place, on appelle une première personne (par exemple un agent et/ou l'utilisateur auquel ce véhicule a été affecté). S'il ne s'agit pas d'une voiture appartenant au parc de véhicules, on peut appeler une deuxième personne, par exemple notamment les forces de l'ordre pour gérer l'enlèvement de ce véhicule).

On notera que lorsqu'un véhicule appartenant au parc de véhicules est remis en charge 408 sur une borne de charge, des informations le concernant peuvent être transmises 481 au système de location (heure de branchement, résumé de la location, etc.), par le biais de la borne de charge et/ou de location ou par le biais de la liaison directe véhicule/organe central.

Le déroulement du procédé de surveillance d'occupation peut ainsi comprendre les étapes suivantes :
- Détection 402 de présence de véhicule 130 sur l'emplacement surveillé 122₁ ;
- optionnellement, décompte 403 d'un temps d'attente prédéterminé ;
- Test de détection 404 de branchement ;

Si un branchement a lieu de façon valide, traitement 408 de charge du véhicule :
- envoi d'une requête d'information au véhicule,
- transmission d'information au système central 102,
- le cas échéant, enregistrement de la terminaison de la location par le système, et
- envoi de courant dans la borne pour la recharge du véhicule, en fonction des besoins et du système de régulation de charge ;

Si aucun branchement n'a lieu, ou d'une façon non satisfaisante, traitement 406 de stationnement :
- Si un stationnement temporaire 461 est autorisé par un utilisateur, par exemple par en s'identifiant selon des moyens d'un type connu, décompte d'un temps prédéterminé ;
   ∘Lorsque le temps prédéterminé est dépassé, si le véhicule est toujours présent, le système central 102 en est informé par l'un des éléments de la station 104,
   ∘le système central identifie alors le titulaire actuel du véhicule grâce à un recoupement de données dans la base de données centrale et émet un message pour l'avertir, et/ou avertit un agent de location sur place ou mobile ;
- Si aucun utilisateur n'a indiqué au autorisé 461 de stationnement temporaire :
   ∘vérification 462 dans la base des véhicules appartenant au parc de véhicules, pour déterminer si un véhicule du parc de location est proche de la place de stationnement - par exemple en comparant les coordonnées GPS actuelles de chacun des véhicules avec celles de la place de stationnement concernée ;
   ∘dans le cas où le système identifie un véhicule du parc présent à ces coordonnées ou proche et qui n'est pas connecté, il identifie 463 le titulaire en cours de location grâce à un recoupement de données dans la base de données centrale et l'avertit et/ou avertit un agent de location - par exemple pour réparer un oubli de connexion ou un défaut de fonctionnement de la connexion
   ∘dans le cas où aucun véhicule du parc géré n'est identifié à cet emplacement ou dans cette zone et qui ne soit pas connecté, le système considère 464 que l'occupation de l'emplacement est indésirable et avertit un agent de location ou les forces de l'ordre.

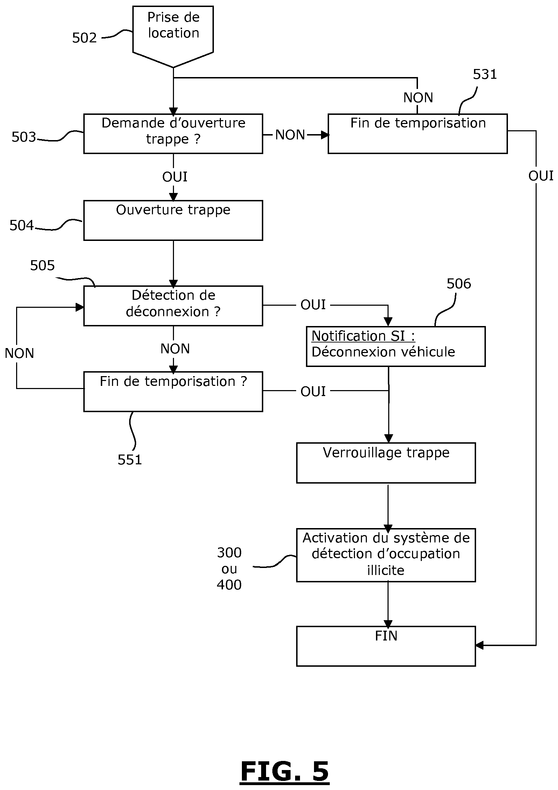

La FIGURE 5 est un organigramme schématique illustrant un exemple de mode de réalisation lors d'un départ de véhicule d'un emplacement.

Lors d'une prise de location 502, l'utilisateur demande l'ouverture 504 de la trappe 202 pour déconnecter le véhicule. Lorsque la déconnexion manuelle est détectée 505, le véhicule est alors considéré comme attribué, et n'est plus en stockage sur l'emplacement. La phase de surveillance d'occupation 300, 400, et notamment le capteur de présence, est alors activée lorsque la déconnexion d'un véhicule est enregistrée 506, et le véhicule est considéré comme en stationnement.

La phase de surveillance d'occupation 300, 400 est activée aussi dès lors que le véhicule reste connecté à la borne depuis un temps supérieur à une durée de seuil, comme par exemple à l'issue d'une temporisation 531 décomptée après la prise en location 502 du véhicule ou d'une temporisation 551 décomptée après la demande d'ouverture de la trappe.

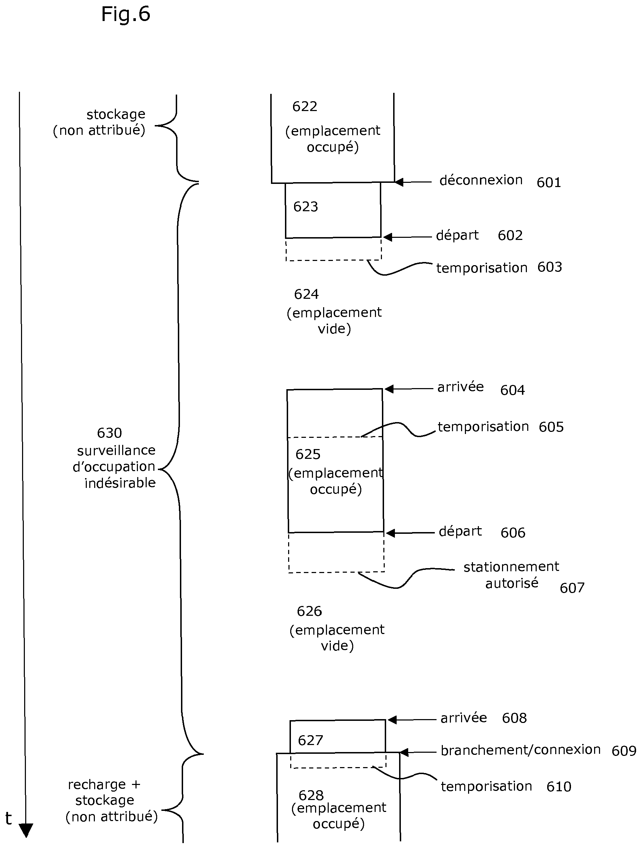

La FIGURE 6 est un schéma temporel illustrant un exemple d'un cycle possible de fonctionnement d'un emplacement géré selon l'invention.

A l'issue d'une période de stockage 622 d'un véhicule non attribué, représentée par la barre large sur la figure, une prise en location avec déconnexion 601 est enregistrée par le système. La phase de surveillance d'occupation 630 débute et l'emplacement reste occupé 623 sous le régime du stationnement, représenté par une barre plus étroite, jusqu'au départ 602 qui a lieu ici avant la fin de la temporisation 603.

Après une période d'emplacement libre 624, un autre véhicule géré arrive 604 sur l'emplacement géré, et l'utilisateur déclare un stationnement temporaire avant la fin de la temporisation 605. L'emplacement est occupé 625 au titre du stationnement temporaire autorisé, pendant une durée ici inférieure à la durée maximale autorisée 607.

Un dépassement de la durée maximale autorisée 607 aurait alors entraîné une alerte, par exemple un avertissement lumineux.

Après une nouvelle période d'emplacement libre 626, encore un autre véhicule arrive 608 sur l'emplacement géré. L'emplacement est alors occupé 627 sous le régime du stationnement, jusqu'à ce que l'utilisateur connecte le véhicule 609 et mette fin à la location, avant la fin de la temporisation 610.

La phase de surveillance d'occupation 630 est alors terminée et l'emplacement est à nouveau sous le régime de stockage non attribué 628, si besoin avec recharge automatique par la borne.

Au cours de la phase de surveillance d'occupation 630, tout dépassement des temporisations 603, 605, 610 ou du stationnement temporaire autorisé 607 aurait provoqué l'émission d'une alerte accompagné des informations sur la nature du dépassement constaté et les opérations précédentes, vers un opérateur ou les forces de l'ordre, par exemple pour intervention technique ou pour verbalisation ou enlèvement.

Bien sûr, l'invention n'est pas limitée aux exemples qui viennent d'être décrits et de nombreux aménagements peuvent être apportés à ces exemples sans sortir du cadre de l'invention.

## Revendications

1. Procédé de gestion d'un emplacement de stationnement pour véhicule, ledit emplacement comprenant des moyens de détection d'occupation dudit emplacement et au moins une borne de rechargement d'énergie adaptée à fournir de l'électricité à un véhicule connecté à cette borne, ledit procédé comprenant, au sein d'une phase dite de surveillance d'occupation, réalisée après connexion manuelle dudit véhicule à ladite borne pour un rechargement électrique dudit véhicule :
- une détection, par lesdits moyens de détection d'occupation, d'un état de présence d'un véhicule occupant ledit emplacement géré, et
- une détection d'un état d'absence de branchement d'un véhicule à ladite borne de rechargement ;
ledit procédé comprenant en outre, après une détection de présence sans détection de branchement, au moins une opération de traitement dit de stationnement, comprenant une émission d'au moins une alerte par des moyens sonores ou visuels, ou par enregistrement ou émission d'au moins un message informatique.

2. Procédé selon la revendication précédente, **caractérisé en ce qu'**il comprend en outre un décompte d'une temporisation à partir d'une détection positive de présence à un instant déterminé ; et **en ce que** le déclenchement de l'opération de traitement de stationnement est conditionné à une détection de présence avec absence de branchement à l'issue de ladite temporisation.

3. Procédé selon l'une quelconque des revendications précédentes, **caractérisé en ce que**, lorsque le branchement d'un véhicule sur la borne est détecté, le procédé détermine si le véhicule appartient à un ensemble de véhicules compatibles avec la borne de charge, par exemple par des moyens de communication numérique de ladite borne de rechargement avec le véhicule branché.

4. Procédé selon la revendication 3, **caractérisé en ce que**, dans le cas d'une détection de présence avec branchement, le procédé comprend en outre les étapes suivantes :
- communication numérique entre la borne de rechargement et le véhicule branché ;
- émission ou enregistrement d'au moins un message numérique représentant un identifiant du véhicule et un instant de connexion dudit véhicule à ladite borne, à destination d'un système informatique gérant une pluralité de véhicules compatibles de manière interchangeable avec une pluralité d'emplacements ; et
- optionnellement, déclenchement d'au moins une opération de rechargement dudit véhicule par ladite borne de rechargement.

5. Procédé selon l'une quelconque des revendications précédentes, **caractérisé en ce que** l'opération de traitement de stationnement comprend une étape de vérification d'au moins une donnée numérique pour déterminer si le véhicule a obtenu une autorisation de stationnement.

6. Procédé selon la revendication précédente, **caractérisé en ce que**, si on détermine que le véhicule a obtenu une autorisation de stationnement, le procédé comprend en outre un décompte d'une durée écoulée depuis le début de la détection de présence ou depuis le début de l'opération de traitement de stationnement.

7. Procédé selon l'une quelconque des revendications précédentes, **caractérisé en ce que**, l'opération de traitement de stationnement comprend une étape de vérification d'appartenance ou non du véhicule détecté à un ensemble de véhicules compatibles avec la borne de rechargement.

8. Procédé selon la revendication précédente, **caractérisé en ce que** la vérification d'appartenance comprend une comparaison entre :
- d'une part une donnée représentant la position géographique de l'emplacement géré, et
- d'autre part une base de données contenant les positions instantanées de véhicules appartenant à une liste de véhicules compatibles avec la borne de rechargement.

9. Procédé selon l'une quelconque des revendications 7 ou 8, **caractérisé en ce que**, dans le cas d'une appartenance positive du véhicule à l'ensemble de véhicules compatibles avec la borne de rechargement, il comprend en outre les étapes suivantes :
- recherche d'un identifiant représentant un utilisateur actuellement titulaire du véhicule détecté, par un système informatique gérant une pluralité de véhicules compatibles de manière interchangeable avec une pluralité d'emplacements ; et
- émission d'un message numérique à destination dudit utilisateur actuellement titulaire du véhicule.

10. Système de gestion d'un emplacement de stationnement de véhicules, **caractérisé en ce qu'**il comprend :
- des moyens de détection d'occupation dudit emplacement ;
- des moyens de fourniture d'énergie formant une borne de rechargement apte à fournir de l'électricité à un véhicule connecté à la borne;
- des moyens de détection de branchement d'un véhicule à ladite borne de rechargement ;
- moyens sonores, visuels ou numériques d'émission d'au moins un message d'information ou d'alerte; et
- des moyens de traitement de données ;
configurés pour mettre en oeuvre le procédé de gestion selon l'une quelconque des revendications précédentes.

11. Système selon la revendication précédente, **caractérisé en ce qu'**il comprend des moyens de communication numérique avec des moyens de traitement de données d'un véhicule appartenant à un parc de véhicules compatibles de manière interchangeable avec une pluralité d'emplacements ; et/ou avec un système informatique gérant un tel parc.

## Patentansprüche

1. Verfahren zur Verwaltung eines Parkplatzes für Fahrzeuge, wobei der Parkplatz Sensoreinrichtungen zur Belegungserkennung des Parkplatzes und mindestens eine Energieladestation umfasst, welche für die Stromversorgung eines mit dieser Ladestation verbundenen Fahrzeugs geeignet ist, wobei das Verfahren innerhalb einer sogenannten Belegungsüberwachungsphase, welche nach manueller Verbindung des Fahrzeugs mit der Ladestation zum elektrischen Aufladen des Fahrzeugs durchgeführt wird, wie folgt umfasst:
- eine Erfassung eines Präsenzstatus eines den verwalteten Parkplatz belegenden Fahrzeugs durch die Belegungssensoreinrichtungen und
- eine Erfassung eines Abwesenheitsstatus eines Anschlusses eines Fahrzeugs an der Ladestation,
wobei das Verfahren außerdem nach einer Präsenzerfassung ohne Anschlusserfassung mindestens einen Vorgang einer sogenannten Parkplatzverarbeitung umfasst, welcher eine Ausgabe mindestens eines Alarms durch akustische oder visuelle Einrichtungen oder durch Aufnahme bzw. Ausgabe mindestens einer Computernachricht umfasst.

2. Verfahren nach dem vorhergehenden Anspruch, **dadurch gekennzeichnet, dass** es außerdem eine Abrechnung einer Laufzeit ab einer positiven Präsenzerfassung zu einem bestimmten Zeitpunkt umfasst, und dass das Auslösen des Vorgangs zur Parkplatzverarbeitung von einer Präsenzerfassung mit Abwesenheitsstatus eines Anschluss am Ende der Laufzeit abhängt.

3. Verfahren nach einem der vorhergehenden Ansprüche, **dadurch gekennzeichnet, dass** bei Erfassung des Anschlusses eines Fahrzeugs an der Ladestation vom Verfahren bestimmt wird, ob das Fahrzeug zu einem Bestand an mit der Ladestation kompatiblen Fahrzeugen gehört, zum Beispiel anhand von numerischen Kommunikationseinrichtungen der Ladestation mit dem angeschlossenen Fahrzeug.

4. Verfahren nach Anspruch 3, **dadurch gekennzeichnet, dass** im Falle einer Präsenzerfassung mit Anschluss das Verfahren außerdem folgende Ablaufschritte umfasst:
- numerische Kommunikation zwischen der Ladestation und dem angeschlossenen Fahrzeug,
- Ausgabe oder Aufnahme mindestens einer numerischen Nachricht zur Darstellung eines Identifikators des Fahrzeugs und eines Verbindungszeitpunkts des Fahrzeugs mit der Ladestation an ein Computersystem, das eine Vielzahl von mit einer Vielzahl von Parkplätzen austauschbar kompatiblen Fahrzeugen verwaltet, und
- optional Auslösen mindestens eines Aufladevorgangs des Fahrzeugs durch die Ladestation.

5. Verfahren nach einem der vorhergehenden Ansprüche, **dadurch gekennzeichnet, dass** der Vorgang zur Parkplatzverarbeitung einen Ablaufschritt der Überprüfung mindestens einer numerischen Angabe umfasst, um zu bestimmen, ob das Fahrzeug eine Parkerlaubnis erhalten hat.

6. Verfahren nach dem vorhergehenden Anspruch, **dadurch gekennzeichnet, dass** bei Feststellung, dass das Fahrzeug eine Parkerlaubnis erhalten hat, das Verfahren außerdem eine Abrechnung einer seit dem Beginn der Präsenzerfassung bzw. seit dem Beginn des Parkplatzabwicklungsvorgangs laufenden Zeitdauer umfasst.

7. Verfahren nach einem der vorhergehenden Ansprüche, **dadurch gekennzeichnet, dass** der Vorgang zur Parkplatzverarbeitung einen Überprüfungsschritt umfasst, ob das erfasste Fahrzeug zu einem Bestand an mit der Ladestation kompatiblen Fahrzeugen gehört oder nicht.

8. Verfahren nach dem vorhergehenden Anspruch, **dadurch gekennzeichnet, dass** die Überprüfung der Zugehörigkeit einen Vergleich zwischen:
- einerseits einer Angabe über die geographische Lage des verwalteten Parkplatzes und
- andererseits einer Datenbank, welche die augenblicklichen Positionen von Fahrzeugen enthält, die zu einer Liste von mit der Ladestation kompatiblen Fahrzeugen zählt,
umfasst.

9. Verfahren nach einem der Ansprüche 7 oder 8, **dadurch gekennzeichnet, dass** es im Falle einer positiven Zugehörigkeit des Fahrzeugs zu dem Bestand an mit der Ladestation kompatiblen Fahrzeugen außerdem folgende Ablaufschritte umfasst:
- Suche nach einem Identifikator zur Darstellung eines das erfasste Fahrzeug derzeit besitzenden Benutzers durch ein Computersystem, das eine Vielzahl von mit einer Vielzahl von Parkplätzen austauschbar kompatiblen Fahrzeugen verwaltet, und
- Ausgabe einer numerischen Nachricht an den das Fahrzeug derzeit besitzenden Benutzer.

10. System zur Verwaltung eines Parkplatzes für Fahrzeuge, **dadurch gekennzeichnet, dass** es umfasst:
- Einrichtungen zur Belegungserfassung des Parkplatzes,
- Einrichtungen zur Stromversorgung in der Form einer Ladestation, die dazu geeignet ist, ein an der Ladestation angeschlossenes Fahrzeug mit Strom zu versorgen,
- Einrichtungen zur Erfassung eines Fahrzeuganschlusses an der Ladestation,
- akustische, visuelle oder numerische Einrichtungen zur Ausgabe mindestens einer Informations- bzw. Alarmnachricht, und
- Einrichtungen zur Datenverarbeitung,
dafür ausgelegt, das Verwaltungsverfahren nach einem der vorhergehenden Ansprüche einzusetzen.

11. System nach dem vorhergehenden Anspruch, **dadurch gekennzeichnet, dass** es Einrichtungen zur numerischen Kommunikation mit Einrichtungen zur Datenverarbeitung eines Fahrzeugs, welches zu einem Fuhrpark von mit einer Vielzahl von Parkplätzen austauschbar kompatiblen Fahrzeugen gehört, und/oder mit einem ein solches Fuhrpark verwaltenden Computersystem umfasst.

## Claims

1. A method for managing a parking space for a vehicle, said parking space comprising means for detecting the occupation of said parking space and at least one power recharging terminal capable of providing electricity to a vehicle connected to this terminal, said method comprising, within a phase called occupation monitoring, performed after manual connection of said vehicle to said terminal for electrical recharging of said vehicle, comprising :
- a detection, by said means for detecting the occupation, of a state of presence of a vehicle occupying the managed parking space, and
- a detection of a state of absence of connection of a vehicle to the said recharging terminal;
said method comprising moreover, after a detection of presence without detection of a connection, at least one processing operation, called parking processing operation, comprising a transmission of at least one warning by audible or visual means, or by recording or transmission of a computerized message.

2. The method according to the preceding claim, **characterized in that** it comprises moreover a countdown of a time period from a positive detection of a presence at a given moment; and **in that** the triggering of the parking processing operation is then dependent on a detection of presence with the absence of connection at the end of said time period.

3. The method according to any one of the preceding claims, **characterized in that**, when the connection of a vehicle onto the terminal is detected, the method determines if the vehicle is a member of a group of vehicles which are compatible with the charging terminal, for example by means of digital communication of said recharging terminal with the connected vehicle.

4. The method according to claim 3, **characterized in that**, in the case of a detection of presence with a connection, the method comprises moreover the following steps:
- digital communication between the recharging terminal and the connected vehicle;
- transmission or recording of at least one digital message representing an identifier of the vehicle and a moment of connection of said vehicle to said terminal, to a computer system managing a plurality of vehicles that are compatible in an interchangeable manner with a plurality of parking spaces; and
- optionally, triggering of at least one operation of recharging said vehicle by said recharging terminal.

5. The method according to any one of the preceding claims, **characterized in that** the parking processing operation comprises a step of verification of at least one item of digital data for determining if the vehicle has obtained parking authorization.

6. The method according to the preceding claim, **characterized in that**, if it is determined that the vehicle has obtained a parking authorization, the method comprises moreover a countdown of the elapsed time since the start of the detection of presence or since the start of the parking processing operation.

7. The method according to any one of the preceding claims, **characterized in that** the parking processing operation comprises a step of verification if the detected vehicle is a member of a group of vehicles which are compatible with the recharging terminal.

8. The method according to the preceding claim, **characterized in that** the verification of membership comprises a comparison between:
- on the one hand an item of data representing the geographical position of the managed parking space, and
- on the other hand a database containing the current positions of vehicles included in a list of vehicles which are compatible with the recharging terminal.

9. The method according to any one of claims 7 or 8, **characterized in that**, in the case of a positive membership of the vehicle in the group of vehicles which are compatible with the recharging terminal, it comprises moreover the following steps:
- searching for an identifier representing a user currently in charge of the detected vehicle, by a computer system managing a plurality of vehicles which are compatible in an interchangeable manner with a plurality of parking spaces; and
- transmission of a digital message to said user currently in charge of the vehicle.

10. A system for managing a parking space for a vehicle, **characterized in that** it comprises:
- means for detecting the occupation of said parking space;
- means for providing power forming a recharging terminal capable of supplying electricity to a vehicle connected to the terminal;
- means for detecting connection of a vehicle to said recharging terminal;
- audible, visual or digital means of transmission of at least one data message or a warning; and
- data processing means
configured for implementing the management method according to any one of the preceding claims.

11. The system according to the preceding claim, **characterized in that** it comprises means of digital communication with data processing means of a vehicle which is a member of a fleet of vehicles which are compatible in an interchangeable manner with a plurality of parking spaces; and/or with a computer system managing such a fleet.
